# EUROPÄISCHE PATENTANMELDUNG

(11) **EP 3 473 989 A1**
(43) Veröffentlichungstag der Anmeldung: **24.04.2019**
(21) Anmeldenummer: 18197564.0
(22) Anmeldetag: 28.09.2018
(51) Int. Cl.: G01J 3/46, A45D 44/00, G09B 19/00

(54) **FARBINDIKATOREINRICHTUNG ZUR FARB- UND/ODER TYPBERATUNG MINDESTENS EINER PERSON, SET AUS MINDESTENS EINER ERSTEN UND ZWEITEN FARBINDIKATOREINRICHTUNG, VERFAHREN ZUR FARB- UND/ODER TYPBERATUNG MINDESTENS EINER PERSON MIT DER FARBINDIKATOREINRICHTUNG UND VERWENDUNG DER FARBINDIKATOREINRICHTUNG UND/ODER DES SETS ZUR FARB- UND/ODER TYPBERATUNG**

(30) Priorität: 17.10.2017 DE 102017124075
(71) Anmelder: Krebs, Olaf, 90592 Schwarzenbruck (DE)
(72) Erfinder: Krebs, Olaf, 90592 Schwarzenbruck (DE)
(74) Vertreter: Negendanck, Matthias

(57) **Zusammenfassung**

Farbindikatoreinrichtung zur Farb- und/oder Typberatung mindestens einer Person, wobei die Farbindikatoreinrichtung ein Flächenbauteil mit einer Aussparung ist.

## Beschreibung

### Technisches Gebiet:

Die Erfindung betrifft eine Farbindikatoreinrichtung zur Farb- und/oder Typberatung mindestens einer Person mit den Merkmalen des Anspruchs 1. Die Erfindung betrifft auch ein Set aus mindestens einer ersten und zweiten Farbindikatoreinrichtung mit den Merkmalen des Anspruchs 11, ein Verfahren zur Farb- und/oder Typberatung mindestens einer Person mit der Farbindikatoreinrichtung mit den Merkmalen des Anspruchs 12, die Verwendung der Farbindikatoreinrichtung und/oder des Sets zur Farb- und/oder Typberatung mindestens einer Person mit den Merkmalen des Anspruchs 15.

### Hintergrund:

Oftmals beraten Friseure und Kosmetiker ihre Kunden hinsichtlich einer Farbe oder eines Farbtons z.B. bei der Auswahl einer passenden Haarfarbe, eines farblich passenden Kleidungsstücks oder eines Schmuckstücks. Üblicherweise erfolgt die Beratung unter Zuhilfenahme von eingefärbten Haarproben oder verschiedenfarbigen Tüchern, die um die Schultern und den Hals gelegt werden. Insbesondere sind goldfarbene und silberfarbene Tücher bekannt, mit denen bestimmt werden kann, ob kalte Farbtöne oder warme Farbtöne dem Hautton des Kunden besonders schmeicheln. Mit diesen herkömmlichen Methoden ist das Ergebnis für den jeweiligen Berater und die Kunden nur abgeschwächt und zeitversetzt wahrzunehmen.

### Beschreibung:

Der Erfindung liegt die Aufgabe zugrunde, eine effektive und leicht einsetzbare Farbindikatoreinrichtung bereitzustellen, die insbesondere ein schnelles und unverfälschtes Ergebnis bringen kann. Diese Aufgabe wird durch eine Farbindikatoreinrichtung zur Farb- und/oder Typberatung mindestens einer Person mit den Merkmalen des Anspruchs 1, durch ein Set aus mindestens einer ersten und zweiten Farbindikatoreinrichtung mit den Merkmalen des Anspruchs 11, durch ein Verfahren zur Farb- und/oder Typberatung mindestens einer Person mit der Farbindikatoreinrichtung mit den Merkmalen des Anspruchs 12 und durch die Verwendung der Farbindikatoreinrichtung und/oder des Sets zur Farb- und/oder Typberatung mindestens einer Person mit den Merkmalen des Anspruchs 15 gelöst. Bevorzugte oder vorteilhafte Ausführungsformen der Erfindung ergeben sich aus den Unteransprüchen der nachfolgenden Beschreibung und/oder den beigefügten Figuren.

Es wird eine Farbindikatoreinrichtung vorgeschlagen, die zur Farb- und/oder Typberatung mindestens einer Person geeignet und/oder ausgebildet ist. Vorzugsweise erfolgt die Farb- und/oder Typberatung in der Art und Weise, dass mindestens eine Farbe und/oder mindestens ein Farbton bestimmt wird, die/der zur einem Hautton der mindestens einem Person passt und/oder diesem schmeichelt.

Erfindungsgemäß ist die Farbindikatoreinrichtung ein Flächenbauteil mit einer Aussparung.

In einer bevorzugten Ausführungsform der Erfindung ist die Farbindikatoreinrichtung ein Werkzeug mit handlichen Abmaßen und/oder mit einem handlichen Gewicht. Vorzugsweise ist die Farbindikatoreinrichtung im Friseur-und/oder Kosmetikergewerbe zu Beratungszwecken mindestens einer Person einsetzbar und/oder verwendbar. Insbesondere ist die Farbindikatoreinrichtung als Werkzeug in einem Kopf- und/oder Gesichtsbereich der mindestens einen Person, insbesondere zur Beratung der mindestens einen Person vor einem Spiegel, verwendbar.

Vorzugsweise ist das Flächenbauteil als eine runde, bevorzugt kreisrunde oder ovale Platte, oder als eine mehreckige, bevorzugt quadratische oder rechteckige Platte ausgebildet. Auch andere Außenkonturen der Platte, z.B. eine Herz- oder Sternform oder ein Fünf- oder Sechseck etc., sind im Rahmen der Erfindung möglich. Die Platte kann aus Holz, zum Beispiel aus Pressspan, aus Kork oder aus Kunststoff gebildet sein.

Beispielsweise weist die Farbindikatoreinrichtung, insbesondere das Flächenbauteil, eine Höhe, Breite und/oder einen Durchmesser von mindestens 300 mm, vorzugsweise von mindestens 350 mm, insbesondere von mindestens 400 mm auf. Alternativ oder optional ergänzend weist die Farbindikatoreinrichtung, insbesondere das Flächenbauteil, eine Höhe, Breite und/oder einen Durchmesser von maximal 550 mm, vorzugsweise von maximal 500 mm auf. Durch die handliche Größe, Breite und/oder den Durchmesser ist die Farbindikatoreinrichtung, z.B. bei einem Friseur und/oder Kosmetikerbesuch, in dem Kopf- und/oder Gesichtsbereich der mindestens einen Person einfach und gefahrlos, zum Beispiel bei und/oder während einer Kundenberatung durch den Friseur und/oder durch einen Kosmetiker, einsetzbar.

In einer bevorzugten konstruktiven Ausgestaltung der Erfindung ist die Aussparung zentral in dem Flächenbauteil angeordnet. Beispielsweise ist die Aussparung ein rundes, zum Beispiel kreisrundes oder ovales Loch. Alternativ kann die Aussparung ein mehreckiges, bevorzugt rechteckiges oder quadratisches Loch sein. Auch geeignete Freiformen sind im Rahmen der Erfindung möglich.

Besonders bevorzugt ist, dass die Aussparung eine Form und/oder Abmaße aufweist, sodass die mindestens eine Person ihr Gesicht zumindest abschnittsweise durch die Aussparung hindurchstecken kann. Hierfür weist die Aussparung eine Höhe, Breite und/oder einen Durchmesser von vorzugsweise mindestens 120 mm, insbesondere von mindestens 160 mm, im Speziellen von mindestens 200 mm auf. Alternativ oder optional ergänzend weist die Aussparung eine Höhe, Breite und/oder einen Durchmesser von maximal 350 mm, vorzugsweise von maximal 300 mm auf.

In einer bevorzugten Ausführungsform der Erfindung umfasst das Flächenbauteil, insbesondere als Platte, eine Vorderseite und eine Rückseite. Vorzugsweise weist die Vorderseite einen ersten Indikatorbereich und die Rückseite einen zweiten Indikatorbereich auf. Insbesondere ist/sind der erste und/oder zweite Indikatorbereich zum Anzeigen mindestens einer passenden Farbe und/oder zum Anzeigen mindestens eines Farbtons, der für einen Hautton der mindestens einen Person, insbesondere für den Hautton im Gesicht der mindestens einen Person, passend ist und/oder diesem schmeichelt. Im Speziellen erfolgt das Anzeigen durch eine optische Wirkung und/oder Wahrnehmung der mindestens einen Person über ihr Spiegelbild und/oder durch eine optische Wirkung auf und/oder Wahrnehmung durch eine andere Person, z.B. durch den Friseur und/oder den Kosmetiker.

In einer besonders bevorzugten konstruktiven Umsetzung der Erfindung bedeckt der erste Indikatorbereich die Vorderseite des Flächenbauteils und der zweite Indikatorbereich die Rückseite des Flächenbauteils zumindest teilweise, bevorzugt vollständig. Insbesondere bildet der erste Indikatorbereich auf der Vorderseite einen die Aussparung, bevorzugt vollständig, umgebenden Rahmen. Im Speziellen bildet der zweite Indikatorbereich auf der Rückseite einen die Aussparung, bevorzugt vollständig, umgebenden Rahmen.

In einer weiteren bevorzugten Ausführungsform der Erfindung sind die Indikatorbereiche verschiedenfarbig ausgebildet. Beispielsweise ist der erste Indikatorbereich silberfarben oder grau ausgebildet. Optional ist der zweite Indikatorbereich gold- oder bronzefarben ausgebildet. Zur weiteren Farb- und/oder Farbtonbestimmung ist es im Rahmen der Erfindung möglich, dass der erste Indikatorbereich und/oder der zweite Indikatorbereich andere Farben als die Vorgenannten aufweist/aufweisen. Insbesondere unterscheiden sich die anderen Farben voneinander. Der erste und/oder zweite Indikatorbereich kann als eine Schicht oder Lage auf die Vorderseite beziehungsweise Rückseite des Flächenbauteils aufgebracht sein. Beispielsweise kann die Schicht oder Lage eine farbige Folie sein. Es kann sich aber auch um eine Farbschicht handeln, die auf die jeweilige Seite des Flächenbauteils aufgestrichen oder aufgesprüht ist.

Oftmals wirkt der Hautton des Gesichts der mindestens eine Person in Kombination mit einem Silber- oder Grauton oder mit einem Gold- oder Kupferton fahl und/oder faltig, wogegen er mit dem jeweils anderen Farbton rosig und/oder frisch wirkt. Diese Wirkung kann der mindestens einen Person mit der Farbindikatoreinrichtung in vorteilhafter Weise auf einfache und schnelle Art, insbesondere bei Positionierung der mindestens einen Person vor einem Spiegel, verdeutlicht werden. Insbesondere ist das Ergebnis für einen Berater und/oder für die mindestens eine Person sofort ohne Zeitverzögerung wahrnehmbar. Dadurch dass die Farbindikatoreinrichtung ein Flächenbauteil mit Aussparung ist, kann durch eine vollständige Umrahmung des Gesichts ein die Wirkung beeinflussender Hintergrund, der z.B. im Spiegelbild sichtbar ist, vollständig abgeschirmt werden. Das Ergebnis ist dadurch insbesondere unverfälscht sichtbar. Somit können für das Gesicht oder für den Hautton der mindestens einen Person passende Farben einfach, unverfälscht und schnell bestimmt werden, sodass die Haut in dem Gesicht jünger aussieht.

Einen weiteren Gegenstand der Erfindung bildet ein Set aus mindestens einer ersten und zweiten Farbindikatoreinrichtung nach der bisherigen Beschreibung und/oder nach den Ansprüchen 1-10. Die erste Farbindikatoreinrichtung weist ein erstes Flächenbauteil auf. In das erste Flächenbauteil ist eine Aussparung mit ersten Abmaßen und/oder mit einer ersten Form eingebracht. Die zweite Farbindikatoreinrichtung umfasst ein zweites Flächenbauteil. Das zweite Flächenbauteil weist eine Aussparung mit zweiten Abmaßen und/oder mit einer zweiten Form auf. Dadurch ist die erste Farbindikatoreinrichtung zur Farb- und/oder Typberatung einer ersten Person mit einer ersten Kopf- und/oder Gesichtsgröße, mit einer ersten Kopf- und/oder Gesichtsform und/oder zur Verwendung bei der ersten Person geeignet und/oder ausgebildet. Insbesondere ist die zweite Farbindikatoreinrichtung zur Farb- und/oder Typberatung einer zweiten Person mit einer zweiten Kopf- und/oder Gesichtsgröße, mit einer zweiten Kopf- und/oder Gesichtsform und/oder zur Verwendung bei der zweiten Person geeignet und/oder ausgebildet. Insbesondere kann aus den mindestens zwei Farbindikatoreinrichtungen je nach Größe und Form des Flächenbauteils und/oder der Aussparung gewählt werden, sodass eine passende Farbindikatoreinrichtung für unterschiedliche Personen bereitgestellt werden kann.

Ein Verfahren zur Farb- und/oder Typberatung mindestens einer Person mit der Farbindikatoreinrichtung nach der bisherigen Beschreibung und/oder nach einem der Ansprüche 1-11 bildet einen weiteren Gegenstand der Erfindung. Im Rahmen des Verfahrens wird das Flächenbauteil so vor den Kopf der mindestens eine Person gehalten, dass das Gesicht der mindestens einem Person zumindest abschnittsweise durch die Aussparung hindurchragt und dass eine der beiden Indikatorbereiche den hindurchragenden Teil des Gesichts umrahmt.

Im Rahmen des Verfahrens ist es bevorzugt, dass das Flächenbauteil von dem Kopf entfernt, geschwenkt und erneut so vor den Kopf der mindestens einen Person gehalten wird, dass das Gesicht der mindestens einen Person zumindest abschnittsweise durch die Aussparung hindurchragt und dass der andere Indikatorbereich den hindurchragenden Teil des Gesichts umrahmt.

In einem weiteren bevorzugten Verfahrensschritt des Verfahrens wird anhand des ersten und/oder zweiten Indikatorbereichs, der den hindurchragenden Teil des Gesichts umrahmt oder umrahmt hat, wahrgenommen, welche optische Wirkung der jeweilige Indikatorbereich auf das Gesicht der Person hat. Insbesondere wird anhand der Wahrnehmung des ersten und/oder zweiten Indikatorbereichs und anhand der optischen Wirkung mindestens eine für den Hautton der Person passende Farbe und/oder mindestens ein für den Hautton der Person passender Farbton bestimmt.

Einen weiteren Gegenstand der Erfindung bildet eine Verwendung der Farbindikatoreinrichtung zur Farb- und/oder Typberatung der mindestens einen Person, wobei die Farbindikatoreinrichtung nach der bisherigen Beschreibung und/oder nach einem der Ansprüche 1-10 ausgebildet ist. Alternativ oder optional ergänzend bildet eine Verwendung des Sets zur Farb- und/oder Typberatung der mindestens einen ersten und zweiten Person einen weiteren Gegenstand der Erfindung, wobei das Set nach der bisherigen Beschreibung und/oder nach Anspruch 11 ausgebildet ist.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: eine Draufsicht auf eine Vorderseite eines Flächenbauteils einer Farbindikatoreinrichtung, wobei das Flächenbauteil eine Aussparung aufweist;
- Figur 2: eine Draufsicht auf eine Rückseite des Flächenbauteils aus Figur 1;
- Figur 3: eine schematische Darstellung eines Verfahrens zur Farb- und/oder Typberatung mindestens einer Person mit der Farbindikatoreinrichtung aus den Figuren 1 und 2.

Einander entsprechende oder gleiche Teile sind in den Figuren jeweils mit den gleichen Bezugszeichen versehen.

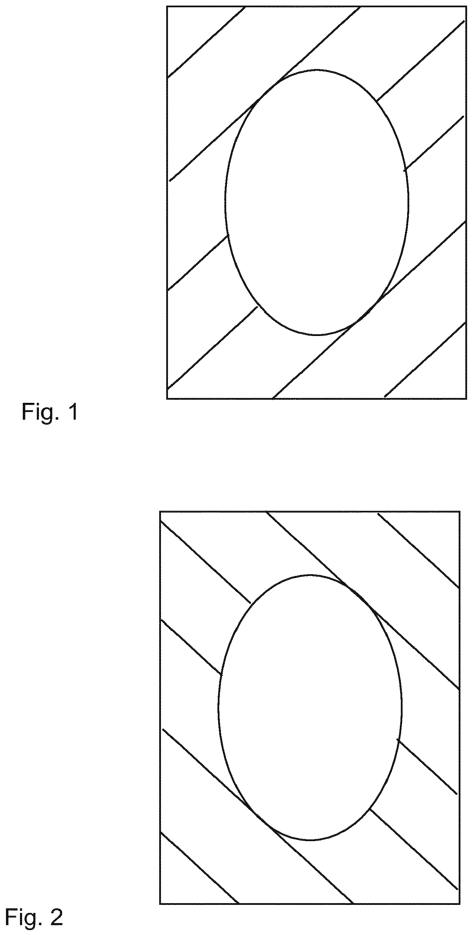

Die Figuren 1 und 2 zeigen eine Farbindikatoreinrichtung 1, die dazu ausgebildet ist, eine Farb- und/oder Typberatung bei mindestens einer Person 4 durchzuführen. Die Farb- und/oder Typberatung wird oftmals durch einen Friseur und/oder Kosmetiker vorgenommen. Insbesondere verwendet der Friseur und/oder der Kosmetiker die Farbindikatoreinrichtung 1 bei der Farb- und/oder Typberatung der mindestens einen Person 4.

Die Farbindikatoreinrichtung 1 weist ein Flächenbauteil 2 auf, in das eine Aussparung 3 eingebracht ist. Das Flächenbauteil 2 ist als eine rechteckige Platte aus Holz, zum Beispiel aus Pressspan, oder aus Kork oder Kunststoff ausgebildet. Es weist Abmaße und/oder ein Gewicht auf, die/das angenehm, einfach und leicht handhabbar sind. Insbesondere ist vorgesehen, dass der Friseur und/oder der Kosmetiker das Flächenbauteil 2 mit einer oder beiden Händen greift und in einem Kopf- und/oder Gesichtsbereich der mindestens einen Person 4 verwendet.

Beispielsweise weist das Flächenbauteil 2 eine Länge von mindestens 300 mm, vorzugsweise von mindestens 350 mm, insbesondere von mindestens 400 mm und/oder von maximal 550 mm, vorzugsweise von maximal 500 mm auf. Um ein Rechteck zu bilden ist eine Breite des Flächenbauteils 2 kleiner als die Länge ausgebildet.

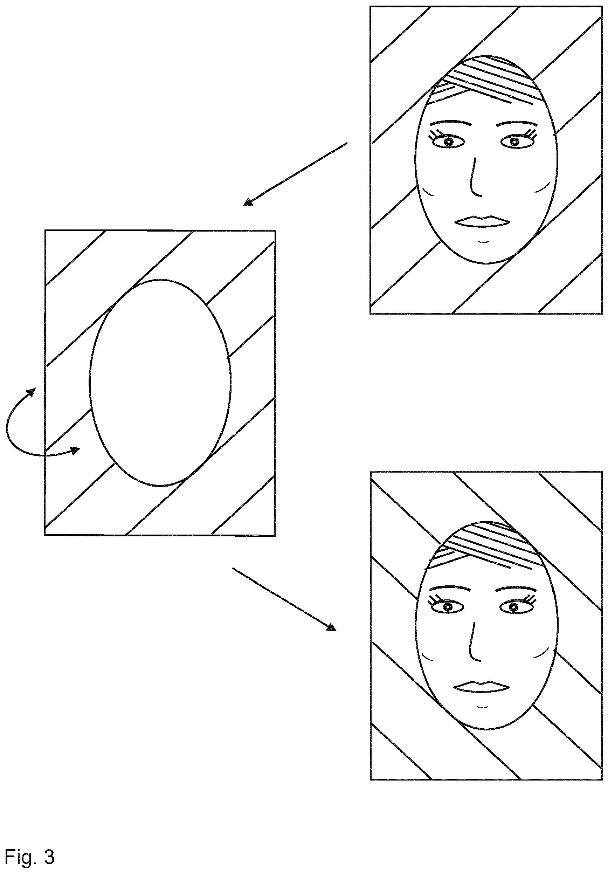

Die Aussparung 3 weist eine ovale Form auf. Sie ist zentral in dem Flächenbauteil 2 angeordnet und/oder eingebracht. Die Aussparung 3 ist in ihrer Form und/oder in ihren Abmaßen so ausgebildet, dass die mindestens eine Person 4 ihr Gesicht 5 zumindest abschnittsweise, bevorzugt vollständig, durch die Aussparung 3 hindurchstecken kann (siehe Figur 3). Hierfür weist die Aussparung 3 eine Länge von mindestens 120 mm, insbesondere von mindestens 160 mm, im Speziellen von mindestens 200 mm auf und/oder von maximal 350 mm, vorzugsweise von maximal 300 mm auf. Eine Breite der Aussparung 3 ist kleiner als die Länge, sodass die ovale Form gebildet ist.

Es kann auch ein Set aus einer ersten Farbindikatoreinrichtung und einer zweiten Farbindikatoreinrichtung gebildet sein. Die erste Farbindikatoreinrichtung weist ein erstes Flächenbauteil mit einer Aussparung auf, die erste Abmaße und/oder eine erste Form aufweist. Die zweite Farbindikatoreinrichtung weist ein zweites Flächenbauteil mit einer Aussparung auf, die zweite Abmaße und/oder eine zweite Form aufweist. Die erste Farbindikatoreinrichtung ist bei einer ersten Person mit einer ersten Kopf- und/oder Gesichtsgröße und/oder mit einer ersten Kopf- und/oder Gesichtsform verwendbar und/oder zur Beratung der ersten Person einsetzbar.

Die zweite Farbindikatoreinrichtung ist bei einer zweiten Person mit einer zweiten Kopf- und/oder Gesichtsgröße und/oder mit einer zweiten Kopf- und/oder Gesichtsform verwendbar und/oder zur Beratung der zweiten Person einsetzbar. Insbesondere umfasst das Set mindestens zwei Farbindikatoreinrichtungen mit Flächenbauteilen, die unterschiedliche große und/oder geformte Aussparungen aufweisen. Auch die Flächenbauteile können unterschiedliche Konturen und/oder Größen aufweisen. Dadurch können die Farbindikatoreinrichtung individuell entsprechend der Köpfe und/oder Gesichter mindestens zweier Personen ausgewählt und verwendet werden.

Das Flächenbauteil 2 weist eine Vorderseite 6 auf, die in Figur 1 gezeigt ist. Es weist eine Rückseite 7 auf, die in Figur 2 gezeigt ist. Auf der Vorderseite 6 ist ein erster Indikatorbereich 8 angeordnet und auf der Rückseite 7 ein zweiter Indikatorbereich 9. Der erste und zweite Indikatorbereich 8, 9 bedecken die jeweilige Seite 6, 7 des Flächenbauteils 2 vollflächig. Es ist alternativ möglich, dass der jeweilige Indikatorbereich 8, 9 die entsprechende Seite 6, 7 des Flächenbauteils 2 teilweise bedeckt und/oder zum Beispiel einen Rahmen um die Aussparung 3 bildet.

Der erste und zweite Indikatorbereich 8, 9 sind als eine Schicht auf die jeweilige Seite 6, 7 des Flächenbauteils 2 aufgebracht. Möglich ist eine Folienbeschichtung oder eine Beschichtung durch Aufbringen von Farbe, zum Beispiel durch Aufsprühen oder Aufstreichen der Farbe.

Der erste und zweite Indikatorbereich 8, 9 sind dazu ausgebildet, eine passende Farbe und/oder einen passenden Farbton für einen Hautton der mindestens einen Person 4 durch optische Wirkung und/oder Wahrnehmung anzuzeigen. Hierfür sind die beiden Indikatorbereiche 8, 9 verschiedenfarbig ausgebildet. Beispielsweise ist der erste Indikatorbereich 8 grau oder silberfarbig und der zweite Indikatorbereich 9 gold- oder bronzefarbig. Auch andere sich voneinander unterscheidende Farben oder Farbtöne der Indikatorbereiche 8, 9 sind alternativ möglich. Die Farben der beiden Indikatorbereiche 8, 9 können unterschiedliche optische Wirkungen auf das Gesicht 5 und/oder den Hautton des Gesichts 5 der mindestens einen Person 4 haben.

Die mindestens eine Person 4 kann die Wirkung der Farbe des jeweiligen Indikatorbereichs 8, 9 einfach, schnell und unmittelbar wahrnehmen und einschätzen. Beispielsweise wirkt das Gesicht 5 fahl und faltig, wenn der erste Indikatorbereich 8 das Gesicht 5 umrahmt. Dagegen kann es rosig, frisch und/oder glatt wirken, wenn das Gesicht 5 von dem zweiten Indikatorbereich 9 umgeben ist.

Insbesondere ist es hierbei von Vorteil, dass das Gesicht 5 der mindestens einen Person 4 vollständig von dem jeweiligen Indikatorbereich 8, 9 umgeben ist und eine Umgebung z.B. in einem Spiegelbild durch das Flächenbauteil 2 abgeschirmt ist. Dadurch kann eine Fehleinschätzung und/oder optische Ablenkung durch die Umgebung vermieden werden. Dem Friseur und/oder dem Kosmetiker ist durch die Farbindikatoreinrichtung 1 ein effektives und leicht einzusetzendes Werkzeug zur Beratung der mindestens einer Person 4 hinsichtlich der zu dem Hautton passenden Farbe und/oder des passenden Farbtons bereitgestellt.

Figur 3 zeigt eine schematische Darstellung eines Verfahrens zur Farb- und/oder Typberatung der mindestens einen Person 4 mit der Farbindikatoreinrichtung 1 aus den Figuren 1 und 2. Das Flächenbauteil 2 wird so vor den Kopf der mindestens einen Person 4 gehalten, dass das Gesicht 5 zumindest abschnittsweise, bevorzugt vollständig, durch die Aussparung 3 hindurchragt. Dadurch wird ein hindurchragender Teil des Gesichts 5 von dem ersten Indikatorbereich 8 umrahmt. Vorzugsweise befindet sich die mindestens eine Person 4 vor dem Spiegel und kann ihr Spiegelbild und eine Wirkung des ersten Indikatorbereichs 8 auf das Gesicht 5 und/oder auf den Hautton wahrnehmen.

Anschließend wird das Flächenbauteil 2 im Rahmen des Verfahrens von dem Kopf der mindestens einen Person 4 entfernt und geschwenkt, sodass der zweite Indikatorbereich 9 im Spiegelbild sichtbar wird. Das Flächenbauteil 2 wird so vor den Kopf der Person 4 gehalten, dass das Gesicht 5 erneut zumindest abschnittsweise, bevorzugt vollständig, durch die Aussparung 3 hindurchragt und der zweite Indikatorbereich 9 den hindurchragenden Teil des Gesichts 5 umrahmt. Die Person 4 kann nun durch ihr Spiegelbild wahrnehmen, welche Wirkung der zweite Indikatorbereich 9 auf das Gesicht 5 und/oder auf den Hautton hat.

Der Friseur und/oder Kosmetiker kann die mindestens eine Person 4 durch den Einsatz der Farbindikatoreinrichtung 1 hinsichtlich der zu dem Gesicht 5 und/oder zu dem Hautton passenden Farbe und/oder des passenden Farbtons beraten. Dadurch kann im Rahmen des Verfahrens anhand des den hindurchragenden Teil des Gesichts 5 umrahmenden ersten und zweiten Indikatorbereichs 8, 9 mindestens eine für das Gesicht und/oder den Hautton passende Farbe und/oder mindestens ein für das Gesicht 5 und/oder den Hautton passender Farbton bestimmt werden. Insbesondere wird die Farbe und/oder der Farbton gewählt, der dem Hautton des Gesichts 5 am meisten schmeichelt und der das Gesicht 5 jung, frisch und/oder rosig erscheinen lässt.

### Bezugszeichenliste:

- 1: Farbindikatoreinrichtung
- 2: Flächenbauteil
- 3: Aussparung
- 4: Person
- 5: Gesicht
- 6: Vorderseite
- 7: Rückseite
- 8: erster Indikatorbereich
- 9: zweiter Indikatorbereich

## Patentansprüche

1. Farbindikatoreinrichtung (1) zur Farb- und/oder Typberatung mindestens einer Person (4),
**dadurch gekennzeichnet, dass**
die Farbindikatoreinrichtung (1) ein Flächenbauteil (2) mit einer Aussparung (3) ist.

2. Farbindikatoreinrichtung (1) nach Anspruch 1, **dadurch gekennzeichnet, dass** die Farbindikatoreinrichtung (1) ein in einem Kopf- und/oder Gesichtsbereich der mindestens einen Person (4) verwendbares Werkzeug mit handlichen Abmaßen und/oder mit einem handlichen Gewicht, z.B. für das Friseur- und/oder Kosmetikergewerbe, ist.

3. Farbindikatoreinrichtung (1) nach Anspruch 1 oder 2, **dadurch gekennzeichnet, dass** das Flächenbauteil (2) eine runde oder mehreckige Platte ist.

4. Farbindikatoreinrichtung (1) nach einem der vorhergehenden Ansprüche, **dadurch gekennzeichnet, dass** die Aussparung (3) zentral in dem Flächenbauteil (2) angeordnet ist.

5. Farbindikatoreinrichtung (1) nach einem der vorhergehenden Ansprüche, **dadurch gekennzeichnet, dass** die Aussparung (3) ein rundes oder mehreckiges Loch in dem Flächenbauteil (2) ist.

6. Farbindikatoreinrichtung (1) nach einem der vorhergehenden Ansprüche, **dadurch gekennzeichnet, dass** die Aussparung (3) eine Form und/oder Abmaße aufweist, sodass ein Gesicht (5) der mindestens einen Person (4) zumindest abschnittsweise durch die Aussparung (3) hindurchsteckbar ist.

7. Farbindikatoreinrichtung (1) nach einem der vorhergehenden Ansprüche, **dadurch gekennzeichnet, dass** das Flächenbauteil (2) eine Vorderseite (6) mit einem ersten Indikatorbereich (8) und eine Rückseite (7) mit einem zweiten Indikatorbereich (9) zum Anzeigen mindestens einer/eines für das Gesicht (5) und/oder einen Hautton der mindestens einen Person (4) passenden Farbe und/oder Farbtons, insbesondere durch optische Wahrnehmung, aufweist.

8. Farbindikatoreinrichtung (1) nach Anspruch 7, **dadurch gekennzeichnet, dass** der erste Indikatorbereich (8) die Vorderseite (6) des Flächenbauteils (2) und der zweite Indikatorbereich (9) die Rückseite (7) des Flächenbauteils (2) zumindest teilweise bedeckt und/oder einen die Aussparung (3) umgebenden Rahmen bildet.

9. Farbindikatoreinrichtung (1) nach Anspruch 7 oder 8, **dadurch gekennzeichnet, dass** die Indikatorbereiche (8, 9) verschiedenfarbig ausgebildet sind.

10. Farbindikatoreinrichtung (1) nach einem der Ansprüche 7 bis 10, **dadurch gekennzeichnet, dass** der erste Indikatorbereich (8) silberfarben oder grau ist und dass der zweite Indikatorbereich (9) gold- oder bronzefarben ist.

11. Set aus mindestens einer ersten und zweiten Farbindikatoreinrichtung nach einem der Ansprüche 1 bis 10, **dadurch gekennzeichnet, dass** ein erstes Flächenbauteil der ersten Farbindikatoreinrichtung eine Aussparung mit ersten Abmaßen und/oder einer ersten Form aufweist und dass ein zweites Flächenbauteil der zweiten Farbindikatoreinrichtung eine Aussparung mit zweiten Abmaßen und/oder einer zweiten Form aufweist, sodass die erste Farbindikatoreinrichtung zur Verwendung bei einer ersten Person und/oder zur Beratung der ersten Person mit einer ersten Kopf- und/oder Gesichtsgröße und/oder mit einer ersten Kopf- und/oder Gesichtsform geeignet und/oder ausgebildet ist und sodass die zweite Farbindikatoreinrichtung zur Verwendung bei einer zweiten Person und/oder zur Beratung der zweiten Person mit einer zweiten Kopf- und/oder Gesichtsgröße und/oder mit einer zweiten Kopf- und/oder Gesichtsform geeignet und/oder ausgebildet ist.

12. Verfahren zur Farb- und/oder Typberatung mindestens einer Person (4) mit einer Farbindikatoreinrichtung (1) nach einem der Ansprüche 1 bis 11, **dadurch gekennzeichnet, dass** das Flächenbauteil (2) so vor einen Kopf der mindestens einen Person (4) gehalten wird, dass das Gesicht (5) zumindest abschnittsweise durch die Aussparung (3) hindurchragt und eine der beiden Indikatorbereiche (8, 9) den hindurchragenden Teil des Gesichts (5) umrahmt.

13. Verfahren nach Anspruch 12, **dadurch gekennzeichnet, dass** das Flächenbauteil (2) von dem Kopf entfernt, geschwenkt und erneut so vor den Kopf der mindestens einen Person (4) gehalten wird, dass das Gesicht (5) der mindestens einen Person (4) zumindest abschnittsweise durch die Aussparung (3) hindurchragt und der andere Indikatorbereich (8, 9) den hindurchragenden Teil des Gesichts (5) umrahmt.

14. Verfahren nach Anspruch 12 oder 13, **dadurch gekennzeichnet, dass** eine Wirkung der Indikatorbereiche (8, 9) auf das Gesicht (5) und/oder auf den Hautton der mindestens einen Person (5) wahrgenommen wird und/oder dass anhand der Wirkung der Indikatorbereiche (8, 9) mindestens eine für das Gesicht und/oder den Hautton der mindestens einen Person (4) passende Farbe und/oder mindestens ein für das Gesicht (5) und/oder den Hautton der mindestens einen Person (4) passender Farbton bestimmt wird.

15. Verwendung der Farbindikatoreinrichtung (1) nach einem der Ansprüche 1 bis 10 und/oder des Sets nach Anspruch 11 zur Farb- und/oder Typberatung mindestens einer Person (4).
